# EUROPÄISCHE PATENTANMELDUNG

(11) **EP 1 650 086 A2**
(43) Veröffentlichungstag der Anmeldung: **26.04.2006**
(21) Anmeldenummer: 05021262.0
(22) Anmeldetag: 29.09.2005
(51) Int. Cl.: B60R 21/02

(54) **Kraftfahrzeug mit Trennwand**

(30) Priorität: 20.10.2004 DE 102004051015
(71) Anmelder: DaimlerChrysler AG, 70567 Stuttgart (DE)
(72) Erfinder: Allgayer, Holger, 73760 Ostfildern (DE); Schleife, Holger, 70190 Stuttgart (DE)

(57) **Zusammenfassung**

Die Erfindung betrifft ein Kraftfahrzeug mit einem Laderaum (13) und einem von dem Laderaum über eine Trennwand (4) abgetrennten Fahrerraum (12).
Um bei guter Raumausnutzung eine hohe Variabilität zu ermöglichen, ist die Trennwand (4) zweiteilig ausgebildet, wobei die beiden Teile (41, 42) über ein Scharnier (45) miteinander verbunden sind. Das Scharnier (45) ermöglicht, dass das zweite Teil (42) gegenüber dem feststehenden unteren Teil (41) zum Laderaum (13) hin oder zum Fahrerraum (12) hin verschwenkt werden kann. Eine Rastvorrichtung haltert dabei die Trennwand (4) in verschiednen Schwenkwinkeln.

## Beschreibung

Die Erfindung betrifft ein Kraftfahrzeug mit einem geschlossenen Laderaum und einem von dem Laderaum über eine Trennwand abgetrennten Fahrerraum gemäß dem Oberbegriff des Patentanspruchs 1.

Aus der DE 197 51 671 A1 ist eine Tennwand für Kleinbusse oder Kleintransporter bekannt. Diese verläuft quer zur Fahrzeuglängsrichtung und trennt einen Fahrerraum von einem Nutzraum ab. Um den zur Verfügung stehenden Nutzraum zu vergrößern, ist diese Trennwand so ausgebildet, dass die einen oberen Abschnitt und einen unteren Abschnitt aufweist, wobei der untere Abschnitt sich unterhalb der Sitze im Fahrerraum in diesen hinein erstreckt. Dadurch wird auf Kosten des Fahrerraums ein zusätzlicher Nutzraum zur Verfügung gestellt.

Der vorliegenden Erfindung liegt die Aufgabe zu Grunde, ein Fahrzeug zu schaffen, welches bei guter Raumausnutzung eine hohe Variabilität von Laderaum und Fahrerraum bietet und zugleich eine hohe Sicherheit aufweist.

Diese Aufgabe wird erfindungsgemäß durch ein Kraftfahrzeug mit den Merkmalen des Anspruchs 1 gelöst.

Die Trennwand der erfindungsgemäßen Kraftfahrzeugs weist zwei Flächen auf, die über ein quer zum Fahrzeugboden verlaufendes Scharnier miteinander verbunden sind. Eine erste Fläche ist im unteren Bereich des Fahrzeugs angeordnet und sowohl mit dem Fahrzeugboden als auch zu beiden Seiten mit der Fahrzeugwand fest verbunden. Dadurch bildet diese Fläche einen stabilen Abschluss des Laderaums und erhöht die Festigkeit der Fahrzeugstruktur. Die zweite Fläche der Trennwand ist im oberen Bereich des Fahrzeugs angeordnet und kann mittels des Scharniers geschwenkt werden. Die zweite Fläche wird über eine im Bereich des Fahrzeugdaches angeordnete Rastvorrichtung in verschiedenen Schwenkwinkeln fest gehaltert.

Durch das Schwenken des oberen Teils der Trennwand kann somit entweder der Fahrerraum vergrößert werden indem die Trennwand Richtung Laderaum geschwenkt wird, oder es kann der Laderaum vergrößert werden indem die Trennwand Richtung Fahrerraum geschwenkt wird. Dadurch ist es möglich, dass auch sehr große Fahrer bei vorgegebener Größe des Fahrerraums den Fahrzeugsitz weit zurückschieben können, beziehungsweise die Rückenlehne weit nach hinten neigen können, um eine bequeme und ergonomische Sitzhaltung einzunehmen. Hierfür wird die Trennwand zum Landeraum hin geschwenkt, so dass der notwendige Raum für den Fahrer geschaffen wird.

Bei kleineren Fahrern oder bei sehr großvolumigen Ladegütern, kann die Trennwand nach vorne zu dem Fahrerraum hin geschwenkt werden, so dass man einen vergrößerten Laderaum erhält. Über das feststehende untere Segment der Trennwand und das Scharnier ergibt sich eine stabile Anbindung der oberen, zweiten Fläche der Trennwand an die Fahrzeugkarosserie. An dem oberen Ende der zweiten Fläche ist eine Rastvorrichtung vorgesehen, welche diese fest mit dem Fahrzeugdach verbindet. Dadurch wird auch im Falle eines Crashs die notwendige Sicherheit gewährleistet, indem z. B. bei starken Bremsmanövern oder einem Crash, Gepäckstücke durch die Trennwand sicher im Laderaum gehalten werden.

In einer Ausführungsform ist vorgesehen, dass die Rastvorrichtung zwei miteinander kämmende Zahnstangen aufweist. Die erste Zahnstange ist fest mit der Fahrzeugkarosserie, vorzugsweise der Struktur des Fahrzeugdaches, verbunden. Die zweite Zahnstange ist mit der zweiten Fläche der Trennwand gelenkig verbunden. Die beiden Zahnstangen greifen ineinander und legen somit einen bestimmten eingestellten Winkel der zweiten Fläche fest. Die gelenkige Aufhängung der zweiten Zahnstange ermöglicht, dass bei gleich bleibend stabiler Verbindung der beiden Zahnstangen ein relativ großer Winkelbereich umfasst werden kann.

Insbesondere kann vorgesehen sein, dass die Rastvorrichtung eine vorgespannte Feder aufweist, die die zweite Zahnstange in Richtung auf die erste Zahnstange hin beaufschlagt. Dadurch wird die mechanische Verbindung der beiden Zahnstangen weiter verbessert und die Haltekraft der Rastvorrichtung erhöht.

Eine Ausführung sieht vor, dass die Verschränkung der Zähne beider Zahnstangen so ausgebildet ist, dass eine Bewegung der zweiten Zahnstange in Fahrtrichtung nach vorne gesperrt ist und eine Bewegung der zweiten Zahnstange entgegen der Fahrtrichtung nach hinten bei Überdrücken der Rastung ermöglicht wird. Dadurch erhält man eine einfache Verstellmöglichkeit des oberen Trennwandabschnitts in Richtung zum Laderaum hin und gleichzeitig einen besonders guten Halt der Trennwand, sollten Gepäckstücke in Richtung des Fahrerraums auf die Trennwand aufprallen.

Für einen besonders stabilen Halt kann vorgesehen sein, dass mehrere Rastvorrichtungen bzw. Zahnstangenpaare nebeneinander an der zweiten Fläche der Trennwand angeordnet sind.

Unterhalb des Fahrzeugdaches kann ein Dachhimmel angeordnet sein der die Rastvorrichtung abdeckt. Somit ist die Rastvorrichtung optisch vorteilhaft zwischen Dachhimmel und Fahrzeugdach angebracht und vom Fahrerraum aus nicht sichtbar.

Um eine ergonomisch günstige Verstellmöglichkeit des Fahrzeugsitzes zu ermöglichen kann vorgesehen sein, dass das Scharnier in einer solchen Höhe über dem Fahrzeugboden angeordnet ist, dass der resultierende Drehpunkt der zweiten Fläche in etwa in der gleichen Höhe wie der Drehpunkt einer schwenkbaren Lehne des Fahrersitzes angeordnet ist. Durch diese Lösung wird erreicht, dass die zweite Fläche der Trennwand parallel zu einer Rückenlehne eines Fahrersitzes verschwenkt werden kann.

Um eine gute Stabilität bei geringem Gewicht zu erreichen ist vorgesehen, dass die zweite Fläche ein um die zweite Fläche geschlossen umlaufenden mechanisch steifen Rahmen aus Profilmaterial aufweist, in dem eine flächige Füllung aus einem mechanisch steifen Material aufgenommen ist. Diese Füllung kann aus einem Blech oder einem Faserverbundmaterial ausgebildet sein. Ferner kann zur Erhöhung der Steifigkeit die Füllung eine zum Laderaum hingerichtete Wölbung oder eine Profilierung aufweisen.

Eine Anwendung der Erfindung kann insbesondere für leichte Nutzfahrzeuge wie Transporter oder Vans erfolgen Es ist jedoch auch eine Anwendung für Wohnmobile oder Omnibusse vorgesehen, um bei entsprechend guter Raumausnutzung einerseits einen komfortablen Fahrerraum oder Innenraum und andererseits einen möglichst großen Laderaum zur Verfügung zu stellen.

Weitere Merkmale der Erfindung sind in den Zeichnungen dargestellt und in der zugehörigen Beschreibung im Folgenden näher beschrieben.

Es zeigen:
- Fig. 1: einen Längsschnitt durch ein Kraftfahrzeug mit der erfindungsgemäßen Trennwand,
- Fig. 2: eine perspektivische Draufsicht auf eine erfindungsgemäß ausgebildete Trennwand,
- Fig. 3: einen Längsschnitt durch eine Rastvorrichtung, wobei die Trennwand zum Landeraum hin geschwenkt dargestellt ist,
- Fig. 4: die Rastvorrichtung, wobei die Trennwand zum Fahrerraum hin geschwenkt dargestellt ist.

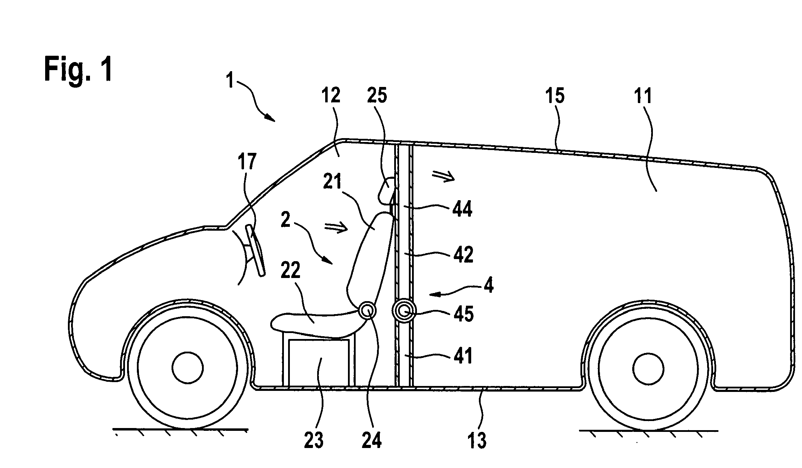

In Figur 1 ist ein Kraftfahrzeug 1 mit einem Laderaum 11 und einem Fahrerraum 12 dargestellt. Der Laderaum 11 wird nach unten von einem Kraftfahrzeugboden 13 und nach oben von einem Kraftfahrzeugdach 15 und seitlich von Seitenwänden 14 abgeschlossen. In dem in Fahrtrichtung vor dem Laderaum angeordneten Fahrerraum 12 ist ein Fahrzeugsitz 2 angeordnet, welcher ein Sitzkissen 22 und eine mit diesem über einen Drehbeschlag 24 schwenkbar verbundene Rückenlehne 21 aufweist. An dem oberen Ende der Rückenlehne 21 ist eine höhenverstellbare Kopfstütze 25 angeordnet. Der Fahrzeugsitz 2 ist mit dem Kraftfahrzeugboden 13 über einen Sitzkasten 23 verbunden und kann zur Einstellung einer gewünschten Sitzposition auf dem Sitzkasten 23 in Fahrzeuglängsrichtung, das heißt nach vorne oder hinten, über Führungslenkschienen verschoben werden. Ferner kann die Rückenlehne 21 über den Drehbeschlag 24 in der Neigung verstellt werden, so dass ein Fahrer die für ihn optimale Sitzposition einstellen kann.

In Fahrtrichtung vor dem Fahrersitz 2 ist eine Instrumententafel 18 und ein Lenkrad 17 angeordnet, um das Cockpit zu verdeutlichen.

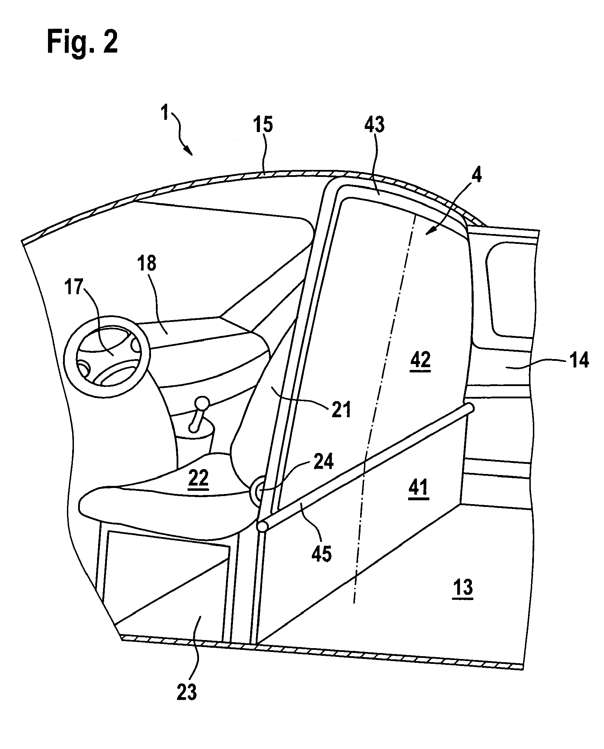

Zwischen dem Fahrerraum 12 und dem Laderaum 11 befindet sich eine Trennwand 4, die den Fahrerraum 12 und den Laderaum 11 voneinander trennt, wie auch in Figur 2 dargestellt ist. Die Trennwand 4 weist eine erste Fläche 41 und eine zweite Fläche 42 auf. Beide Flächen 41, 42 sind über ein quer zum Fahrzeugboden 13 verlaufendes Scharnier 45 miteinander schwenkbar verbunden. Die erste Fläche 41 ist im unteren Bereich der Trennwand 4, nahe dem Fahrzeugboden 13 angeordnet und sowohl mit dem Fahrzeugboden 13 als auch mit beiden Seitenwänden 14 fest verbunden, insbesondere verschweißt, verklebt oder vernietet. Die oberhalb der ersten Fläche 41 angeordnete zweite Fläche 42 verläuft von dem Scharnier 45 nach oben bis hin zum dem Fahrzeugdach 15. Die zweite Fläche ist an ihrem unteren Ende über das Scharnier 45 schwenkbar an dem unteren Teil der Trennwand 41 gelagert und weist an ihrem oberen Ende eine Rastvorrichtung 3 auf, welche die zweite Fläche 42 fest mit dem Fahrzeugdach verbindet.

In der Figur 2 ist über die gestrichelte Mittellinie der Trennwand 4 verdeutlicht, dass das obere Teil 42 gegenüber dem senkrecht verlaufenden unteren Teil 41 nach hinten in den Laderaum hineingeschwenkt ist. Zur Verstärkung der Stabilität weist das obere Teil 42 der Trennwand 4 einen umlaufenden Rahmen 43 auf, der aus einem Profilrahmen, insbesondere ein Aluprofilrahmen oder ein Stahlprofilrahmen, ausgebildet ist. Der Profilrahmen 43 weist eine Füllung 44 auf, die zum Beispiel aus einem Aluminiumblech oder einem Stahlblech oder einem Kunstfaserverbundmaterial bestehen kann. In der Füllung 44 können zudem durchsichtige Flächen vorgesehen sein, die einen Blick von dem Fahrerraum hineine in den Laderaum zulassen. Dadurch kann der Fahrer auch während der Fahr die Gepäckstücke im Laderaum kontrollieren.

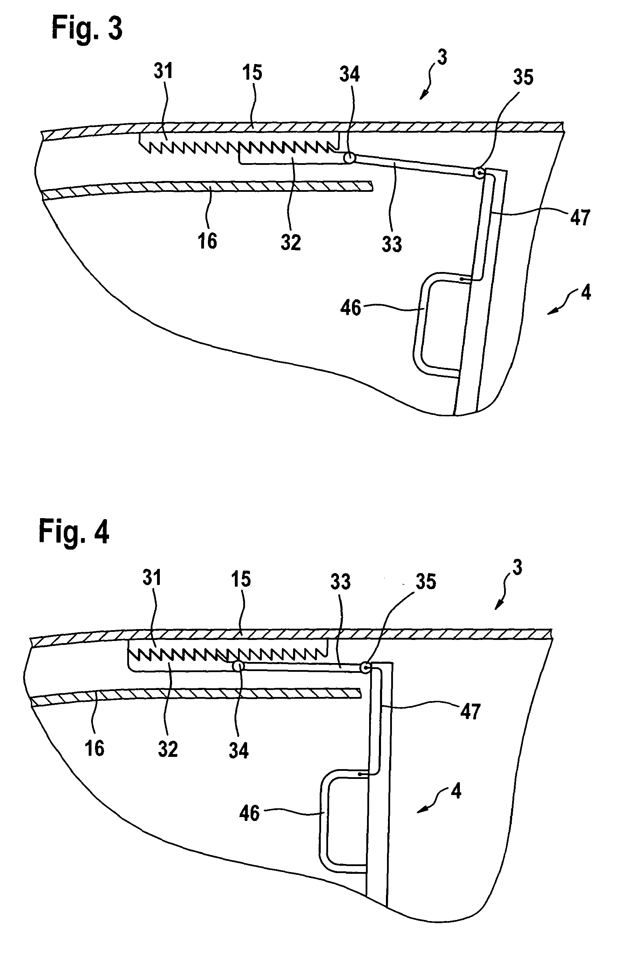

In den Figuren 3 und 4 ist jeweils eine vergrößerte Darstellung des oberen Bereichs zwischen der Trennwand 4 und dem Fahrzeugdach 15 dargestellt. Dort ist insbesondere die Rastvorrichtung 3 detailliert zu sehen. Die Rastvorrichtung 3 weist eine erste Zahnstange 31 und eine Zahnstange 32 auf, wobei die erste Zahnstange 31 fest mit dem Fahrzeugdach 15 verbunden ist und die zweite Zahnstange 32 gelenkig an der Trennwand 4 gelagert ist. Die zweite Zahnstange 32 ist unterhalb der ersten Zahnstange 31 mit dieser kämmend angeordnet. Die Figur 3 zeigt die Rastvorrichtung in einer nach hinten zum Laderaum 13 verschwenkten Position, während die Figur 4 die Rastvorrichtung 3 in einer zum Fahrerraum hin geschwenkten Position zeigt.

Die Rastvorrichtung 3 ist oberhalb des Fahrerraumes 12 im Bereich des Fahrzeugdaches 15 angeordnet und wird durch einen sich unterhalb des Fahrzeugdaches 15 erstreckenden Dachhimmel 16 abgedeckt, so dass die Rastvorrichtung 3 von dem Fahrerraum aus nicht zu sehen ist. Die untere Zahnstange 32 ist über ein erstes Drehgelenk 34 mit einem Gelenkarm 33 verbunden. Der Gelenkarm 33 ist an seinem anderen Ende über ein Federgelenk 35 an dem oberen Ende der Trennwand 4 angelenkt. Das Federgelenk 35 weist eine Feder auf, die die zweite Zahnstange 32 auf die erste Zahnstange 31 hin beaufschlagt, um die Verbindung der beiden Zahnstangen untereinander zu verbessern. Die Verzahnung der beiden Zahnstangen ist so ausgebildet, dass sich die Zahnstangen 31 beziehungsweise 32 gegen eine Bewegung in Fahrtrichtung verschränken, so dass die Trennwand 4 sich nicht nach vorne in Fahrzeugrichtung bewegen kann, sondern lediglich eine Bewegung der Trennwand 4 gegen die Fahrtrichtung, das heißt hin zum Laderaum 11 ermöglicht wird.

Ein an der Trennwand 4 fest angebrachter Handgriff 46 ermöglicht eine bequeme Bedienung beziehungsweise Schwenkung der Trennwand 4 um die durch das Scharnier 45 gebildete Schwenkachse. Über den Handgriff 46 kann die Trennwand 4 einfach durch Drücken zum Laderaum hin in diesen hineingeschwenkt werden. Alternativ kann die Verschwenkung der Trennwand 4 zum Laderaum hin auch durch Verstellen der Rückenlehne 21 erfolgen, indem die Rückenlehne beim nach hinten Schwenken in Anlage mit der Trennwand 4 kommt und diese nach hinten zum Laderaum hin verschwenkt.

Um die Laderaumtrennwand 4 nach vorne in Fahrtrichtung zu verschwenken ist es erforderlich, den Handgriff 46 zu betätigen. Der Handgriff ist über einen Bowdenzug 47 mit den Drehgelenken 34 und 35 verbunden. Durch die Betätigung des Handgriffs wirkt dieser über den Bowdenzug auf die Drehgelenke ein und löst die Verbindung der beiden Zahnstangen 31, 32. Somit wird bei Betätigung des Handgriffs die zweite Zahnstange 32 außer Eingriff mit der ersten Zahnstange 31 gebracht. Über die Betätigung des Handgriffs 46 wird die Rastvorrichtung 3 gelöst und es dem Fahrer ermöglicht, die Trennwand 4 einfach nach vorne in Fahrtrichtung zum Fahrerraum hin schwenken.

In der Figur 4 ist die Rastvorrichtung 3 dargestellt, wobei die Trennwand 4 in einer in Fahrtrichtung vorne liegenden Position, das heißt mit maximal möglichem Laderaumvolumen dargestellt ist.

## Patentansprüche

1. Kraftfahrzeug mit einem geschlossenen Laderaum (11) und einem von dem Laderaum über eine Trennwand (4) abgetrennten Fahrerraum (12) mit einem verstellbaren Fahrzeugsitz (2),
wobei die Trennwand zumindest zwei über ein parallel zu einem Fahrzeugboden verlaufendes Scharnier (45) schwenkbar miteinander verbundene Flächen (41, 42) aufweist,
**dadurch gekennzeichnet,**
**dass** die erste Fläche (41) im unteren Bereich des Fahrzeugs angeordnet ist und sowohl mit dem Fahrzeugboden (13) als auch zu beiden Seiten mit der Fahrzeugwand (14) fest verbunden ist und die zweite Fläche (42) im oberen Bereich des Fahrzeugs angeordnet ist und über das Scharnier (45) sowie eine im Bereich des Fahrzeugdaches (15) angeordnete Rastvorrichtung (3) in verschiedenen Schwenkwinkeln verstellbar fest gehaltert ist.

2. Kraftfahrzeug nach Anspruch 1,
**dadurch gekennzeichnet,**
**dass** die Rastvorrichtung (3) zwei miteinander kämmende Zahnstangen (31, 32) aufweist, wobei eine erste Zahnstange (31) mit dem Fahrzeugdach (15) fest verbunden ist und die zweite Zahnstange (32) mit der zweiten Fläche (42) der Trennwand (4) gelenkig verbunden ist.

3. Kraftfahrzeug nach Anspruch 2,
**dadurch gekennzeichnet,**
**dass** die Rastvorrichtung (3) eine vorgespannte Feder aufweist, die die zweite Zahnstange (32) in Richtung zu der ersten Zahnstange (31) hin beaufschlagt.

4. Kraftfahrzeug nach Anspruch 2 oder 3,
**dadurch gekennzeichnet,**
**dass** die Zahnstangen (31, 32) eine solche Verschränkung aufweisen, die eine Bewegung der zweiten Zahnstange (32) in Fahrtrichtung nach vorne sperrt und eine Bewegung entgegen der Fahrtrichtung nach hinten zulässt.

5. Kraftfahrzeug nach einem der Ansprüche 1 bis 4,
**dadurch gekennzeichnet,**
**dass** unterhalb des Fahrzeugdaches (15) ein Dachhimmel (16) angeordnet ist und die Rastvorrichtung (3) zwischen Dachhimmel (16) und Fahrzeugdach (15) angeordnet ist.

6. Kraftfahrzeug nach einem der Ansprüche 1 bis 5,
**dadurch gekennzeichnet,**
**dass** das Scharnier (45) in einer solchen Höhe über dem Fahrzeugboden (13) angeordnet ist, dass der resultierende Drehpunkt der zweiten Fläche (42) in etwa in der gleichen Höhe wie der Drehpunkt einer schwenkbaren Rückenlehne (21) des Fahrersitzes (2) angeordnet ist.

7. Kraftfahrzeug nach einem der Ansprüche 1 bis 6,
**dadurch gekennzeichnet,**
**dass** die zweite Fläche (42) einen um die zweite Fläche umlaufenden mechanisch steifen Rahmen (43) aus Profilmaterial aufweist, der eine flächige Füllung aus mechanisch steifem Material haltert.

8. Kraftfahrzeug nach Anspruch 7,
**dadurch gekennzeichnet,**
**dass** die Füllung aus Blech oder Faserverbundmaterial ausgebildet ist.

9. Kraftfahrzeug nach Anspruch 7 oder 8,
**dadurch gekennzeichnet,**
**dass** die Füllung eine zum Laderaum (11) hin gerichtete Wölbung oder Profilierung zur Erhöhung der Steifigkeit aufweist.
